(19) Europäisches Patentamt / European Patent Office / Office européen des brevets

(11) **EP 4 603 974 B1**

(12) **EUROPEAN PATENT SPECIFICATION**

(45) Date of publication and mention
of the grant of the patent:
**15.07.2026  Bulletin 2026/29**

(21) Application number: **24806178.0**

(22) Date of filing: **18.03.2024**

(51) International Patent Classification (IPC):
**G06F 1/324** (2019.01)      **G06F 1/3228** (2019.01)
**G06F 9/50** (2006.01)      **G06F 1/3234** (2019.01)
**G06F 9/445** (2018.01)      **G06F 1/329** (2019.01)

(52) Cooperative Patent Classification (CPC):
**G06F 9/445; G06F 1/3228; G06F 1/324;
G06F 1/3243; G06F 1/329**

(86) International application number:
**PCT/CN2024/082285**

(87) International publication number:
**WO 2024/234818 (21.11.2024 Gazette 2024/47)**

(54) **METHOD FOR ADJUSTING CPU FREQUENCY, AND TERMINAL DEVICE**

VERFAHREN ZUR ANPASSUNG DER CPU-FREQUENZ UND ENDGERÄTEVORRICHTUNG

PROCÉDÉ DE RÉGLAGE DE FRÉQUENCE DE CPU, ET DISPOSITIF TERMINAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.05.2023  CN 202310553047**

(43) Date of publication of application:
**20.08.2025  Bulletin 2025/34**

(73) Proprietor: **Honor Device Co., Ltd.
Shenzhen, Guangdong 518040 (CN)**

(72) Inventor: **WANG, Wenwen
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(56) References cited:
WO-A1-2014/135129      CN-A- 109 739 642
CN-A- 111 240 835      CN-A- 115 686 178
CN-A- 117 149 409      US-A1- 2023 045 617

**Description**

This application claims priority to Chinese Patent Application No. 202310553047.X, filed with the China National Intellectual Property Administration on May 16, 2023 and entitled "CPU FREQUENCY ADJUSTMENT METHOD AND TERMINAL DEVICE".

**TECHNICAL FIELD**

This application relates to the field of terminal technologies, and in particular, to a CPU frequency adjustment method and a terminal device.

**BACKGROUND**

With popularization of intelligent terminals, more and more applications are installed on a terminal, and a user often opens a plurality of applications. Application launching is a process of an application from creating a process (create process) to being fully displayed to a user. For the user, naturally, the faster this process, the better. Application launching needs to consume various resources on a terminal device, such as central processing unit (CPU), graphics processing unit (GPU), internal memory, and I/O (input/output) resources.

Generally, a terminal device provides maximum capabilities of various resources to meet an application launching requirement. For example, when an application is launched, the terminal device increases a frequency of the CPU (that is, performs frequency increasing processing on the CPU). After the frequency of the CPU is increased, CPU processing performance is improved, an application launching speed can be accelerated, and application launching duration can be shortened. After the application has finished launching, the terminal device no longer performs frequency increasing processing on the CPU, so as to reduce the frequency of the CPU.

CPU frequency increasing duration may be set on the terminal device. On the one hand, if the CPU frequency increasing duration is set to be too long, power is wasted. On the other hand, if the CPU frequency increasing duration is set to be too short, a maximum capability of the CPU cannot be played out, application launching cannot be accelerated well, and application launching is relatively slow, which affects user experience. How to better set the CPU frequency increasing duration is a problem to be solved.

US 20230/045617 A1 describes a method for managing a boost time required for an application launch in an electronic device. The method includes detecting, by the electronic device, a user input to launch the application. Further, the method includes measuring, by the electronic device, real-time system health parameters of the electronic device. Further, the method includes predicting, by the electronic device, an application launch time by inputting the real-time system health parameters to an AI-based application prediction model. Further, the method includes boosting, by the electronic device, at least one hardware of the electronic device based on the predicted application launch time.

**SUMMARY**

Embodiments of this application provide a CPU frequency adjustment method and a terminal device. An object of the invention is to provide means so that for each application, corresponding CPU frequency increasing duration is adjusted in real time, which can meet a requirement for fast launching of an application and avoid a waste of power.

This object is solved by the subject-matter of the appended independent claims, wherein further embodiments are set out in the dependent claims.

According to a first aspect, a CPU frequency adjustment method is provided, applied to a terminal device, where the terminal device includes a central processing unit CPU, a first application and a second application are installed on the terminal device, and the method includes: performing cold launching of the first application (that is, a process of the first application does not exist in a system background of the terminal device before the first application is launched); increasing a frequency of the CPU in response to launching the first application; and reducing the frequency of the CPU after first frequency increasing duration since a first frame of the first application has completed loading; and performing cold launching of the second application after the first application has completed launching, that is, a process of the second application does not exist in the background system of the terminal device before the second application is launched; increasing the frequency of the CPU in response to launching the second application; and reducing the frequency of the CPU after second frequency increasing duration since a first frame of the second application has completed loading.

Because the first frequency increasing duration is calculated according to duration used for loading the first frame of the first application, and the second frequency increasing duration is calculated according to duration used for loading the first frame of the second application, when longer duration is used for loading the first frame of the application, correspondingly, longer frequency increasing duration is calculated. Duration used for loading the first frame of the first application is less than duration used for loading the first frame of the second application. Therefore, the calculated first frequency increasing duration is less than the second frequency increasing duration.

In this method, when cold launching of the first application is performed, CPU frequency increasing duration is a sum of the duration used for loading the first frame of the first application and calculated duration used for loading a remaining frame of the first application (a frame between ending of loading of the first frame and completion of launching of the first application), and the CPU frequency increasing duration matches an estimated cold launching speed of the first application. When cold launching of the second application is performed, CPU frequency increasing duration is a sum of the duration used for loading the first frame of the second application and calculated duration used for loading a remaining frame of the second application (a frame between ending of loading of the first frame and completion of launching of the second application), and the CPU frequency increasing duration matches an estimated cold launching speed of the second application. The CPU frequency increasing duration matches the cold launching speed of each application respectively, so that it can be ensured that a CPU capability is fully used to accelerate a complete process of cold launching of an application, and a waste of CPU power is avoided.

The terminal device stores a preset correspondence. The first frequency increasing duration is obtained according to the duration used for loading the first frame of the first application and the preset correspondence; and the second frequency increasing duration is obtained according to the duration used for loading the first frame of the second application and the correspondence.

That is, the CPU frequency increasing duration is related to the duration used for loading the first frame of the application. Longer duration used for loading the first frame of the application indicates larger estimated application loading duration, and correspondingly, longer CPU frequency increasing duration. The CPU frequency increasing duration matches the launching speed of the application.

With reference to the first aspect, in a possible implementation, that the first frame of the first application has completed loading includes: a main interface Activity of the first application has completed launching; and that the first frame of the second application has completed loading includes: a main interface Activity of the second application has completed launching.

With reference to the first aspect, in a possible implementation, the increasing a frequency of the CPU is increasing the frequency of the CPU from a first value to a second value; and the reducing the frequency of the CPU is reducing the frequency of the CPU from the second value to the first value.

According to a second aspect, a CPU frequency adjustment method is provided and is applied to a terminal device, where the terminal device includes a central processing unit CPU, a first application and a second application are installed on the terminal device, and the method includes:

launching the first application, where a process of the first application does not exist in a system background of the terminal device before the first application is launched;
increasing a frequency of the CPU in response to launching the first application;
launching the second application, where a process of the second application does not exist in the system background of the terminal device before the second application is launched, the second application is launched after the first application has completed launching, and the first application has not completed launching when the second application is launched; and
reducing the frequency of the CPU after second frequency increasing duration since a first frame of the second application has completed loading.

With reference to the second aspect, in a possible implementation, the method further includes: obtaining first frequency increasing duration according to duration used for loading a first frame of the first application and a preset correspondence; and obtaining the second frequency increasing duration according to duration used for loading a first frame of the second application and the preset correspondence, where the duration used for loading the first frame of the first application is less than the duration used for loading the first frame of the second application, and the first frequency increasing duration is less than the second frequency increasing duration.

In this method, if launching processes of a plurality of application overlap on a timeline, the frequency of the CPU is increased when an application with an earliest launching moment is launched. The frequency of the CPU is reduced when a latest moment of calculated launching completion moments of the plurality of applications arrives. In this way, the CPU frequency increasing duration matches the cold launching speed of the application, so that it can be ensured that a CPU capability is fully used to accelerate a complete process of cold launching of an application, and a waste of CPU power is avoided.

According to a third aspect, a CPU frequency adjustment method is provided and is applied to a terminal device, where the terminal device includes a central processing unit CPU, a first application is installed on the terminal device, and the method includes:
launching the first application at a first moment and increasing a frequency of the CPU in response to launching the first application, where a launching process of the first application includes a first phase and a second phase, the second phase is a phase other than the first phase in the launching process of the first application, and the second phase is after the first phase; and obtaining, according to the first moment and a second moment (a launching completion moment of the first phase of the first application), duration used in the first phase; determining, according to the duration used in the first phase and a preset correspondence, duration used in the second phase; determining a third moment according to the duration used in the second phase (an end moment of the second phase); and reducing the frequency of the CPU at the third moment.

In this method, the first application is launched, and the frequency of the CPU is increased (the frequency of the CPU is increased). When the first phase of launching the first application is completed (for example, the main interface Activity of the first application has completed loading), duration for completing launching the second phase of the first application is estimated according to the duration used in the first phase, and the estimated duration required for launching the second phase is used as remaining duration of CPU frequency increasing, that is, the CPU frequency increasing duration is dynamically adjusted according to the duration used in the first phase (for example, launching duration of a first frame), so that the CPU frequency increasing duration is equivalent to estimated duration for completing launching the first application. That is, the CPU frequency increasing duration matches a launching speed of the first application. It can be ensured that a CPU capability is fully used to accelerate a complete process of cold launching of the first application, and a waste of CPU power is avoided. Because the CPU frequency increasing duration of the first application is dynamically obtained according to an actual situation of current launching of the first application, determined CPU frequency increasing duration is more accurate, and utilization of the CPU capability is more efficient.

With reference to the third aspect, in a possible implementation, the first phase is a phase in which a first frame of the first application has completed loading.

With reference to the third aspect, in a possible implementation, that the first frame of the first application has completed loading includes: a main interface Activity of the first application has completed launching.

With reference to the third aspect, in a possible implementation, the increasing a frequency of the CPU includes: increasing the frequency of the CPU from a first value to a second value; and the reducing the frequency of the CPU includes: reducing the frequency of the CPU from the second value to the first value.

With reference to the third aspect, in a possible implementation, the correspondence is obtained by performing linear regression according to launching data of N applications (for example, N applications with highest user usage frequency obtained through statistics collection); and launching data of an ith application in the N applications includes duration $X_i$ used in a first phase of a launching process of the ith application, and duration $Y_i$ used in a second phase of the launching process of the ith application, where N>0.

That is, a correspondence between the first phase and the second phase of launching the application is obtained according to actual situations of collected launching processes of the N applications. In this case, the duration used in the second phase estimated according to the duration used in the first phase is more accurate.

With reference to the third aspect, in a possible implementation, a process of the first application does not exist in a system background of the terminal device before the first application is launched. That is, the launching process is cold launching.

With reference to the third aspect, in a possible implementation, the terminal device receives a launching operation performed by a user on the first application; and launching the first application in response to the launching operation.

With reference to the third aspect, in a possible implementation, the first application is launched in response to invoking by a second application.

With reference to the third aspect, in a possible implementation, if it is determined that a sum of the duration used in the first phase and the duration used in the second phase is less than or equal to a preset maximum frequency increasing duration threshold, a third moment is obtained according to the duration used in the second phase; and the frequency of the CPU is reduced at the third moment. If it is determined that the sum of the duration used in the first phase and the duration used in the second phase is greater than the preset maximum frequency increasing duration threshold, a fourth moment is obtained according to the maximum frequency increasing duration threshold, where the fourth moment is a moment later than the first moment by the maximum frequency increasing duration threshold; and the frequency of the CPU is reduced at the fourth moment.

In this method, the maximum frequency increasing duration threshold of CPU frequency increasing is preset, which indicates a maximum value of CPU frequency increasing duration of the terminal device. That is, the CPU frequency increasing duration should be less than or equal to the maximum frequency increasing duration threshold. In this way, this thereby prevents cold launching of the first application from occupying excessive CPU resources, which could otherwise cause another process to fail in obtaining CPU resources and result in system lag.

According to a fourth aspect, a terminal device is provided. The terminal device has a function of implementing the method according to the first aspect, the second aspect, or the third aspect. The function may be implemented by using hardware, or may be implemented by executing corresponding software by hardware. The hardware or the software includes one or more modules corresponding to the function.

According to a fifth aspect, a terminal device is provided. The terminal device includes a processor and a memory. The memory is configured to store computer-executable instructions. When the terminal device runs, the processor executes the computer-executable instructions stored in the memory, to enable the terminal device to perform the method according to any one of the first aspect, the second aspect, or the third aspect.

According to a sixth aspect, a terminal device is provided. The terminal device includes a processor. The processor is configured to: after being coupled to a memory and reading instructions in the memory, perform the method according to any one of the first aspect, the second aspect, or the third aspect according to the instructions.

According to a seventh aspect, a computer-readable storage medium is provided. The computer-readable storage medium stores instructions. When the instructions run on a computer, the computer is enabled to perform the method according to any one of the first aspect, the second aspect, or the third aspect.

According to an eighth aspect, a computer program product including instructions is provided. When the computer program product runs on a computer, the computer is enabled to perform the method according to any one of the first aspect, the second aspect, or the third aspect.

According to a ninth aspect, an apparatus (for example, the apparatus may be a chip system) is provided. The apparatus includes a processor, configured to support a terminal device in implementing functions involved in the first aspect, the second aspect, or the third aspect. In a possible design, the apparatus further includes a memory. The memory is configured to store program instructions and data that are necessary to the terminal device. When the apparatus is a chip system, the apparatus may include a chip, or may include a chip and another discrete component.

For technical effects brought by any design manner in the fourth aspect to the ninth aspect, refer to the technical effects brought by different design manners in the first aspect, the second aspect, or the third aspect. Details are not described herein again.

## BRIEF DESCRIPTION OF DRAWINGS

FIG. 1A is a schematic diagram in which CPU frequency increasing duration is greater than application cold launching duration;

FIG. 1B is a schematic diagram in which CPU frequency increasing duration is less than application cold launching duration;

FIG. 2 is a schematic diagram of a principle of a CPU frequency adjustment method according to an embodiment of this application;

FIG. 3 is a schematic flowchart of a CPU frequency adjustment method according to an embodiment of this application;

FIG. 4 is a schematic diagram of a hardware structure of a terminal device to which a CPU frequency adjustment method is applicable according to an embodiment of this application;

FIG. 5A is a schematic diagram of a software structure of a terminal device to which a CPU frequency adjustment method is applicable according to an embodiment of this application;

FIG. 5B is a schematic diagram of module interaction of a CPU frequency adjustment method according to an embodiment of this application;

FIG. 6 is a schematic diagram of a method for processing CPU frequency increasing when two applications with different cold launching speeds on a terminal device are launched according to an embodiment of this application;

FIG. 7 is a schematic diagram of an instance of a scenario of a CPU frequency adjustment method according to an embodiment of this application;

FIG. 8 is a schematic diagram of an instance of another scenario of a CPU frequency adjustment method according to an embodiment of this application;

FIG. 9 is a schematic diagram of an instance of still another scenario of a CPU frequency adjustment method according to an embodiment of this application;

FIG. 10 is a schematic diagram of structural composition of a terminal device according to an embodiment of this application; and

FIG. 11 is a schematic diagram of structural composition of a chip system according to an embodiment of this application.

## DESCRIPTION OF EMBODIMENTS

In descriptions of the embodiments of this application, terms used in the following embodiments are only intended to describe particular embodiments, and are not intended to limit this application. As used in this specification and the appended claims of this application, singular expressions "a", "the", "the foregoing", and "this" are also intended to include an expression such as "one or more", unless otherwise clearly specified in the context. It should be further understood that, in the following embodiments of this application, "at least one" and "one or more" mean one or at least two (including two). The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between associated objects.

As described in this specification, referring to "one embodiment" or "some embodiments" or the like means that one or more embodiments of this application include particular features, structures, or characteristics described with reference to the embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners. The term "connection" includes a direct connection and an indirect connection, unless otherwise specified. The terms "first" and "second" are used for descriptive purposes only and should not be construed as indicating or implying relative importance or implicitly indicating a quantity of indicated technical features.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the word such as "example" or "for example" is intended to present a related concept in a specific manner.

There are a plurality of launching modes such as cold launching and hot launching for an application. Cold launching of an application is a time-consuming manner. Before an application A is launched, if a process of the application A does not exist in a system background of a terminal device, the system needs to create a new process for the application A, and this launching process is denoted as cold launching. Before the application A is launched, if a process of the application A exists in the system background of the terminal device, the system does not need to create a process for the application A, and this launching process is denoted as hot launching. It should be noted that, before the application A is launched in embodiments of this application means when the application A is to be launched, that is, when the application A is triggered to be launched, and within a relatively short period of time before the application A is triggered to be launched.

In some scenarios, an operation of a user triggers cold launching of an application. For example, a home screen of the terminal device includes an application icon 1 of an application 1. The user taps the application icon 1, and cold launching of the application 1 is performed in response to the tap operation performed by the user on the application icon 1. For example, the user inputs voice "enable the application 1", and cold launching of the application 1 is performed in response to receiving the voice of the user. In some scenarios, invoking by another application triggers cold launching of an application. For example, an application 2 runs on the terminal device, the application 2 launches the application 1, and cold launching of the application 1 is performed.

A cold launching process may include from receiving an operation that the user launches an application or invoking by another application to fully displaying a main interface of the application on a screen of a terminal. Generally, the terminal accelerates the cold launching process of the application in a CPU frequency increasing manner, so as to shorten cold launching duration of the application. CPU frequency increasing is also referred to as CPU frequency pulling, which means that a working frequency of a CPU is increased to a maximum value or a relatively high value of a working frequency range of the CPU, so that an application is allocated a relatively large quantity of processing resources. In an implementation, the working frequency of the CPU may be increased to a target frequency. In another implementation, the working frequency of the CPU may be increased by one preset amount.

Generally, uniform CPU frequency increasing duration is set on the terminal. Cold launching of the application starts and triggers CPU frequency increasing. If the CPU frequency increasing duration is cut off, CPU frequency increasing is stopped. This manner is a general solution for all applications, and CPU frequency increasing duration of all the applications is the same.

However, cold launching duration of different applications varies greatly. For example, Table 1 shows cold launching duration of 20 different applications on a same terminal.

**Table 1**

| Application name | Application cold launching duration/ms |
|---|---|
| Application 1 | 1261 |
| Application 2 | 4714 |
| Application 3 | 2586 |
| Application 4 | 1075 |

(continued)

| Application name | Application cold launching duration/ms |
|---|---|
| Application 5 | 1586 |
| Application 6 | 1797 |
| Application 7 | 1430 |
| Application 8 | 1194 |
| Application 9 | 1953 |
| Application 10 | 1086 |
| Application 11 | 4439 |
| Application 12 | 2042 |
| Application 13 | 3600 |
| Application 14 | 1350 |
| Application 15 | 1806 |
| Application 16 | 2486 |
| Application 17 | 1764 |
| Application 18 | 1053 |
| Application 19 | 2967 |
| Application 20 | 3917 |

It can be seen that a difference between longest and shortest cold launching duration is about 3.7s. A uniform CPU frequency increasing duration configuration does not apply to each application.

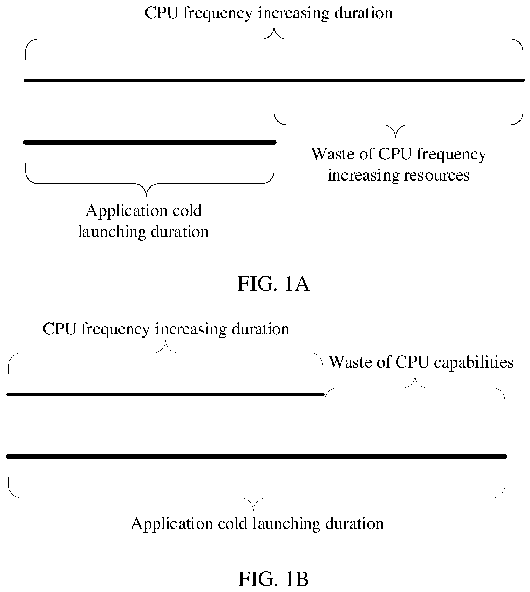

Referring to FIG. 1A, if CPU frequency increasing duration is set to a relatively large value, a CPU usage requirement of an application whose cold launching is relatively slow is met. When cold launching is performed on an application with relatively short cold launching duration, long-time CPU frequency increasing causes a waste of CPU resources and a waste of too much power. For example, the CPU frequency increasing duration is set to 4714 ms. When cold launching is performed on an application 18, launching can be completed within 1053 ms, and CPU frequency increasing resources of the remaining 3661 ms are wasted. When cold launching is performed on an application 12, launching can be completed within 2042 ms, and CPU frequency increasing resources of the remaining 2672 ms are wasted.

Referring to FIG. 1B, if the CPU frequency increasing duration is set to a relatively small value, a CPU usage requirement of an application with relatively fast cold launching is met. When cold launching is performed on an application with relatively long cold launching duration, the CPU frequency increasing duration is cut off, and the application has not completed cold launching, which may cause too slow cold launching of the application and affect user experience. In addition, a maximum CPU capability cannot be played out, resulting in a waste of CPU capability.

An embodiment of this application provides a CPU frequency adjustment method. For each application, corresponding CPU frequency increasing duration is dynamically adjusted according to an actual speed of a current cold launching process of the application. The CPU frequency increasing duration matches a cold launching speed of each application, ensuring full use of the CPU capability, accelerating cold launching of the application, and avoiding a waste of CPU power. In addition, for each application, CPU frequency increasing duration of the application is dynamically obtained according to an actual situation of current cold launching of the application. Compared with a method for statically configuring CPU frequency increasing duration of an application, according to the CPU frequency adjustment method provided in embodiments of this application, CPU frequency increasing duration that better complies with a current actual situation of an application can be obtained, and CPU resources are used more efficiently.

It may be understood that, starting from a terminal device receiving an operation of launching an application by a user or invoking by another application to start to launch a first application, in a time period of a cold launching process of the first application, the terminal device loads a launching guidance interface, an advertisement interface, a welcome interface, a main interface, a content interface, and the like of the first application. Until the main interface of the first application and various elements, controls, and pop-up windows on the main interface are completely presented on a screen of the terminal device, the cold launching process of the first application ends.

According to the CPU frequency adjustment method provided in embodiments of this application, a terminal device receives an operation of launching an application by a user or invoking by another application, cold launching of a first application starts, and the terminal device triggers CPU frequency increasing. When a first phase of cold launching of the first application ends, the terminal device obtains first duration for running a cold launching process of the first phase, and dynamically obtains, according to the first duration, second duration for running a cold launching process of a second phase (a phase other than the first phase in the cold launching process). After the second duration since an end moment of the first phase, the terminal device stops CPU frequency increasing. That is, total duration of CPU frequency increasing is a sum of the first duration and the second duration, that is, the total duration of CPU frequency increasing matches a cold launching speed of the first application.

For different terminals or a same terminal under different loads, cold launching speeds of a same application are different. If CPU frequency increasing duration of each application is preconfigured, configuration data may not match an actual situation of cold launching of an application, and accurate configuration cannot be implemented. According to the CPU frequency adjustment method provided in embodiments of this application, total duration of CPU frequency increasing (first duration + second duration) is dynamically adjusted according to actual duration (first duration) of running in a first phase of cold launching of a first application, so that the total duration of CPU frequency increasing matches an actual speed of current cold launching of the first application. This can provide a CPU frequency increasing capability in an entire cold launching process of the first application, ensure that the CPU capability is fully used, and accelerate cold launching of the first application. In addition, a waste of CPU power caused by too long CPU frequency increasing time can be avoided.

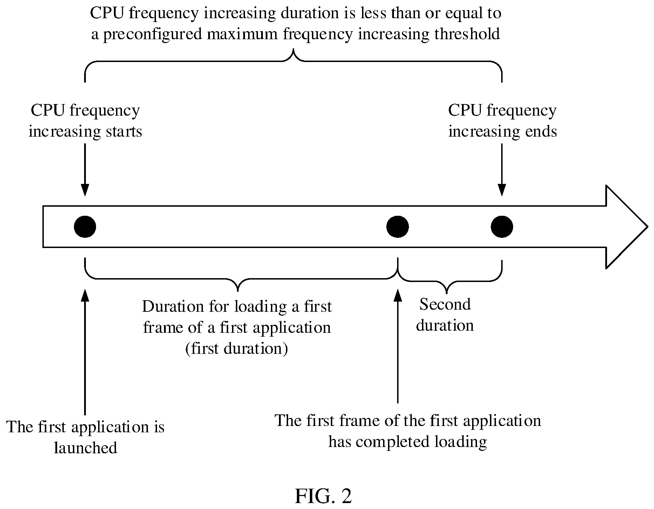

In an implementation, the first phase of cold launching of the first application is a phase of loading a first frame of the first application. For example, referring to FIG. 2, a launching operation (for example, the user taps an application icon of the first application) of the user or invoking by another application is received, the first application is launched, and CPU frequency increasing starts. When the first frame of the first application has completed loading, the terminal device obtains duration for loading the first frame of the first application, that is, obtains the first duration. That the first frame of the first application has completed loading means that a main interface Activity of the first application has completed launching. That is, the first phase is: from starting of launching of the first application (an operation performed by the user to launch the application or invoking by another application is received) to completion of launching of the main interface Activity (MainActivity) of the first application.

The terminal device calculates the second duration according to the first duration. The second duration is duration for loading a remaining frame other than the first frame in the launching process of the first application, that is, duration from completion of loading of the first frame of the first application to completion of cold launching of the first application. That the first application has completed launching means that all elements (controls, pop-up windows, and the like) on the main interface Activity (MainActivity) of the first application has completed loading, that is, all the elements on the main interface Activity of the first application are completely drawn and successfully displayed.

In an implementation, cold launching data of N (for example, 100) applications with highest use frequency on a same platform may be collected in advance. Duration X for completing loading a first frame in a cold launching process of each application in the N applications, and duration Y from completing loading the first frame to completing cold launching of the application are separately obtained. For example, data in cold launching processes of the N applications are collected to obtain $(X_1, Y_1)$, $(X_2, Y_2)$, ..., $(X_i, Y_i)$, ..., $(X_N, Y_N)$. According to $(X_1, Y_1)$, $(X_2, Y_2)$, ..., $(X_i, Y_i)$, ..., $(X_N, Y_N)$, linear regression is performed to obtain a correspondence between duration X for completing loading a first frame and duration Y from completing loading the first frame to completing cold launching of the first application. For example, the correspondence between X and Y is, $Y=aX+b$. According to $(X_1, Y_1)$, $(X_2, Y_2)$, ..., $(X_i, Y_i)$, ..., $(X_N, Y_N)$, linear regression is performed to calculate values of a and b. In this way, the correspondence between the duration X for completing loading the first frame and the duration Y from completing loading the first frame to completing cold launching of the first application is obtained.

It may be understood that, in some other implementations, instead of collecting actual data of cold launching of the N applications, the correspondence between X and Y is preconfigured. For example, Y=X is preset. In some other implementations, X and Y may not have a linear correspondence. For example, $X=Y^2$.

The terminal device may pre-store the correspondence between X and Y, for example, store the values of a and b. When the first frame of the first application has completed loading, the terminal device obtains the first duration, that is, obtains the value of X. The terminal device may obtain the value of Y through calculation according to the correspondence between X and Y, that is, obtain the value of the second duration. After the second duration elapses, the terminal device stops CPU frequency increasing.

From the start of CPU frequency increasing to the end of CPU frequency increasing, CPU frequency increasing duration is the sum of the first duration and the second duration. The sum of the first duration and the second duration is also duration from starting to launch the first application to launching completion. Therefore, the CPU frequency increasing duration matches total duration of the launching process of the first application.

In an implementation, a maximum frequency increasing duration threshold of CPU frequency increasing may be preset, which indicates a maximum value of the CPU frequency increasing duration of the terminal device. That is, if the second duration is less than or equal to a difference between the maximum frequency increasing duration threshold and the first duration, that is, the second duration <= (the maximum frequency increasing duration threshold - the first duration), a CPU frequency increasing cut-off moment is determined according to the second duration. If the second duration is greater than the difference between the maximum frequency increasing duration threshold and the first duration, the CPU frequency increasing cut-off moment is determined according to the maximum frequency increasing duration threshold. In this way, this thereby prevents cold launching of the first application from occupying excessive CPU resources, which could otherwise cause another process to fail in obtaining CPU resources and result in system lag.

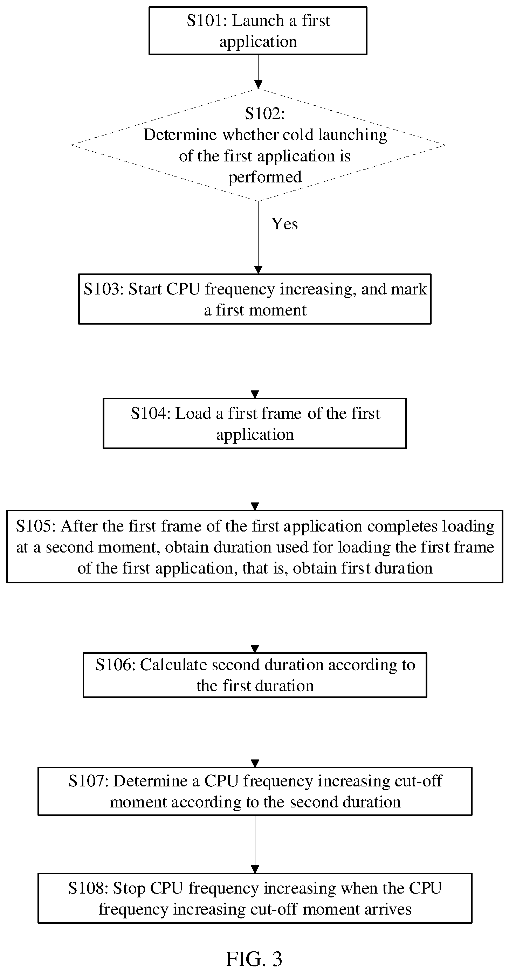

FIG. 3 is a schematic flowchart of a CPU frequency adjustment method according to an embodiment of this application. As shown in FIG. 3, the method may include the following steps:

S101: Launch a first application.

In an implementation, a terminal device receives an operation of launching the first application by a user, and launches the first application in response to the operation. For example, the user taps an application icon of the first application, and the first application is launched. For example, the terminal device receives voice "enable the first application" input by the user, and the first application is launched.

In an implementation, the first application is launched in response to invoking by a second application. For example, a payment application is launched in response to invoking by a shopping application.

S102: Determine whether cold launching of the first application is performed. If cold launching of the first application is performed, S103 is performed.

Optionally, the terminal device determines whether cold launching of the first application is performed. In an implementation, if it is determined that no process corresponding to the first application exists in an operating system before the first application is launched, it is determined that cold launching of the first application is performed. For example, a launching operation of the user is received or invoking by the second application is responded to, it is determined that no process corresponding to the first application exists in the operating system, and the operating system creates a process corresponding to the first application.

It should be noted that, in this embodiment of this application, a cold launching process of the first application is used as an example to describe in detail the CPU frequency adjustment method provided in this embodiment of this application. In some other implementations, the CPU frequency adjustment method provided in this embodiment of this application may be applied to another scenario in which CPU frequency increasing needs to be performed, for example, hot launching of the first application is performed, a slide operation is performed on a window of the first application, or a slide operation is performed on an interface of the first application. For the CPU frequency adjustment method in these scenarios, references may be made to the cold launching scenario of the first application. Examples are not taken one by one in this embodiment of this application.

S103: Start CPU frequency increasing, and mark a first moment.

The first moment is a start moment of CPU frequency increasing.

CPU frequency increasing means increasing a frequency of a CPU. For example, the frequency of the CPU is increased from a current first value to a second value, where the second value is greater than the first value. It may be understood that the CPU may include a plurality of CPU cores. In an implementation, that the frequency of the CPU is increased means that frequencies of all the CPU cores are increased. In another implementation, a frequency of a CPU core bound to the first application may be increased, that is, frequencies of some CPU cores in the plurality of CPU cores may be increased.

S104: Load a first frame of the first application.

After the first application is launched, the first frame starts to be loaded.

S105: After the first frame of the first application completes loading at a second moment, obtain duration used for loading the first frame of the first application, that is, obtain first duration.

In an implementation, after a main interface Activity of the first application completes launching, it is determined that the first frame of the first application completes loading. A launching completion moment of the main interface Activity of the first application is the second moment.

Duration for loading the first frame of the first application (first duration) = the second moment - the first moment.

S106: Calculate second duration according to the first duration.

The second duration is calculated according to a correspondence between duration X for completing loading the first frame and duration Y from completing loading the first frame to completing cold launching of the first application, and the first duration. The second duration is estimated according to the duration for completing loading the first frame and the correspondence between X and Y. That is, the duration from completing loading the first frame to completing cold launching of the first application is estimated according to the duration for completing loading the first frame.

S107: Determine a CPU frequency increasing cut-off moment according to the second duration.

In an implementation, a maximum frequency increasing duration threshold of CPU frequency increasing is preset.

If it is determined that a sum of the duration for loading the first frame of the first application (the first duration) and the second duration obtained through calculation is less than or equal to the maximum frequency increasing duration threshold, it is determined that the CPU frequency increasing cut-off moment (a third moment) = the second moment + the second duration.

If it is determined that the sum of the duration for loading the first frame of the first application (the first duration) and the second duration is greater than the maximum frequency increasing duration threshold, it is determined that the CPU frequency increasing cut-off moment (a fourth moment) = the second moment + (the maximum frequency increasing duration threshold - the first duration).

S108: Stop CPU frequency increasing when the CPU frequency increasing cut-off moment arrives.

In an implementation, when the CPU frequency increasing cut-off moment arrives, frequency increasing is no longer performed on the CPU. For example, after CPU frequency increasing, the frequency of the CPU is the second value, and the frequency of the CPU is reduced when the CPU frequency increasing cut-off moment arrives. For example, the frequency of the CPU is reduced from the current second value to the first value.

If the CPU includes a plurality of CPU cores, in a possible implementation, because the frequency of the CPU core bound to the first application is increased in S103, the frequency of the CPU core bound to the first application is reduced to the first value. In a possible implementation, the frequencies of all the CPU cores are increased (from the first value to the second value) in S103. Optionally, in an example, the frequencies of all the CPU cores may be reduced to the first value. In another example, frequencies of a part of the plurality of CPU cores may be kept at the second value, and another part of the plurality of CPU cores may be disabled.

According to the CPU frequency adjustment method provided in this embodiment of this application, the first application is launched in response to an operation of launching the first application by the user or invoking of the first application by the second application. The first application is launched, and CPU frequency increasing starts. When loading of the main interface Activity of the first application is completed, remaining CPU frequency increasing duration is calculated according to the duration for loading the first frame of the first application, that is, the CPU frequency increasing duration is dynamically adjusted according to launching duration of the first frame. The CPU frequency increasing duration matches a launching speed of the first application, so that it can be ensured that a CPU capability is fully used to accelerate a complete process of cold launching of the first application, and a waste of CPU power is avoided. Because the CPU frequency increasing duration of the first application is dynamically obtained according to an actual situation of current launching of the first application, determined CPU frequency increasing duration is more accurate, and utilization of the CPU capability is more efficient.

The CPU frequency adjustment method provided in this embodiment of this application may be applied to a terminal device that supports CPU frequency increasing. The terminal device may include a mobile phone, a tablet computer, a notebook computer, a personal computer (PC), an ultra-mobile personal computer (UMPC), a handheld computer, a netbook, a smart home device (for example, a smart television, a smart screen, a large screen, a smart speaker, or a smart air conditioner), a personal digital assistant (PDA), a wearable device (for example, a smart watch or a smart bracelet), an onboard device, a virtual reality device, or the like. This is not limited in this embodiment of this application.

It should be understood that, in addition to the terminal device, the method provided in this embodiment of the present invention may also be applied to another type of computer system.

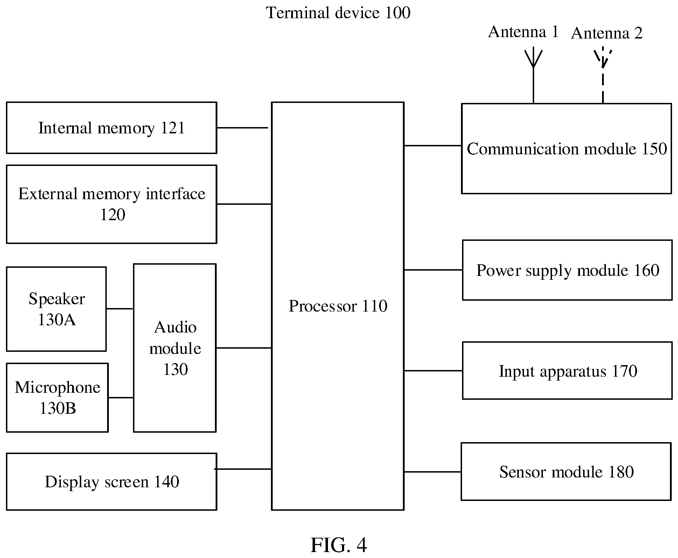

For example, FIG. 4 is a schematic diagram of a structure of a terminal device 100. The terminal device 100 may include a processor 110, an external memory interface 120, an internal memory 121, an audio module 130, a speaker 130A, a microphone 130B, a display screen 140, a communication module 150, a power supply module 160, an input apparatus 170, a sensor module 180, and the like. The sensor module 180 may include a pressure sensor, a touch sensor, and the like.

It may be understood that the structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing unit. For example, the processor 110 may include an application processor (AP), a modem processor, a graphics processing unit (GPU), an image signal processor (ISP), a controller, a video codec, a digital signal processor (DSP), a neural-network processing unit (NPU), and/or the like. Different processing units may be independent components, or may be integrated into one or more processors. In some embodiments, the terminal device 100 may also include one or more processors 110.

The controller is a nerve center and a command center of the terminal device 100. The controller may generate an operation control signal according to instruction operation code and a timing signal, to complete control of instruction fetching and instruction execution.

The application processor may run an operating system of the terminal device 100, and is configured to manage hardware and software resources of the terminal device 100, for example, manage and configure an internal memory, determine a priority of a system resource supply and demand, control an input and output device, operate a network, manage a file system, and manage a driver. The operating system may also be configured to provide an operating interface for a user to interact with the system. Various types of software, such as a drive program and an application (App), may be installed in the operating system.

The NPU is a neural-network (NN) computing processor, which quickly processes input information by referring to a biological neural network structure, for example, by referring to a transferring mode between human brain neurons, and may further perform self-learning continuously. Applications such as intelligent cognition of the terminal device 100 may be implemented by using the NPU.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory, to prevent repeated access and reduce waiting time of the processor 110, thereby improving system efficiency.

In some embodiments, the processor 110 may include one or more interfaces. The interface may include an inter-integrated circuit (12C) interface, an integrated circuit sound (12S) interface, a pulse code modulation (PCM) interface, a universal asynchronous receiver/transmitter (UART) interface, a mobile industry processor interface (MIPI), a general-purpose input/output (GPIO) interface, a SIM card interface, a USB interface, and/or the like.

It can be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The external memory interface 120 may be configured to connect to an external storage card, such as a Micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store one or more computer programs, and the one or more computer programs include instructions. The processor 110 may run the foregoing instructions stored in the internal memory 121, so that the terminal device 100 performs the frequency adjustment method provided in some embodiments of this application, and various applications and data management. Specifically, the internal memory 121 may include a code storage area and a data storage area. The data storage area may store data and the like created when the terminal device 100 is used. In addition, the internal memory 121 may include a high-speed random access memory, and may further include a non-volatile memory, for example, one or more magnetic disk storage components, a flash memory component, or a universal flash storage (UFS). In some embodiments, the processor 110 can run the instructions stored in the internal memory 121 and/or the instructions stored in the memory disposed in the processor 110, to enable the terminal device 100 to perform the frequency adjustment method provided in the embodiments of this application, as well as other applications and data management.

The terminal device 100 may use the audio module 130, the speaker 130A, the microphone 130B, the application processor, and the like to implement an audio function, for example, music playback and audio recording. The audio module 130 is configured to convert digital audio information into an analog audio signal for output, and is further configured to convert an analog audio input into a digital audio signal. The audio module 130 may be further configured to encode and decode an audio signal. In some embodiments, the audio module 130 may be disposed in the processor 110 or some functional modules of the audio module 130 may be disposed in the processor 110.

The speaker 130A, also referred to as a "loudspeaker", is configured to convert an audio electrical signal into a sound signal.

The microphone 130B, also referred to as a "mic" or "mike", is configured to convert a sound signal into an electrical signal. A user may produce a sound near the microphone 130B by using a mouth, and input a sound signal into the microphone 130B.

A communication function of the terminal device 100 may be implemented by using the antenna 1, the antenna 2, the communication module 150, and the like.

The communication module 150 may provide a wireless communication solution that includes cellular, Wi-Fi, Bluetooth (BT), and a wireless data transmission module (for example, 433 MHz, 868 MHz, and 915 MHz) that are applied to the terminal device 100. The communication module 150 may be one or more components integrating at least one communication processing module. The communication module 150 receives an electromagnetic wave via the antenna 1 or the antenna 2, performs frequency modulation and filtering on the electromagnetic wave signal, and transmits the processed signal to the processor 110. The communication module 150 may further receive a to-be-transmitted signal from the processor 110, and perform frequency modulation and amplification on the signal. The amplified signal is converted into an electromagnetic wave and radiated out via the antenna 1 or the antenna 2.

The terminal device 100 implements a display function by using the GPU, the display screen 140, the application processor, and the like. The GPU is a microprocessor for image processing, and is connected to the display screen 140 and the application processor. The GPU is configured to perform mathematical and geometric computation, and render an image. The processor 110 may include one or more GPUs, which execute program instructions to generate or change display information.

The display screen 140 is configured to display an image, a video, or the like. The display screen 140 includes a display panel. The display panel may be a liquid crystal display (LCD), an organic light-emitting diode (OLED), an active-matrix organic light emitting diode or an active-matrix organic light emitting diode (AMOLED), a flexible light-emitting diode (FLED), a Miniled, a MicroLed, a Micro-oLed, a quantum dot light emitting diode (quantum dot light emitting diodes, QLED), or the like. In some embodiments, the terminal device 100 may include one or N display screens 140, where N is a positive integer greater than 1. In this embodiment of this application, the display screen 140 may be configured to display a UI and receive an operation performed by a user on the UI.

In some embodiments, a pressure sensor, a touch sensor, and the like are disposed on the display screen 140. The pressure sensor is configured to sense a pressure signal, and may convert the pressure signal into an electrical signal. When a touch operation is performed on the display screen 140, the terminal device 100 detects a touch operation intensity based on the pressure sensor. The terminal device 100 may also calculate a touch location based on a detection signal of the pressure sensor. The touch sensor, also referred to as a "touch panel", and the display screen 140 may constitute a touch screen that is also referred to as "touchscreen". The touch sensor is configured to detect a touch operation performed on or near the touch sensor. The touch sensor may transfer the detected touch operation to the application processor to determine a type of a touch event. A visual output related to the touch operation may be provided by using the display screen 140.

The power supply module 160 may be configured to supply power to each component included in the terminal device 100. In some embodiments, the power supply module 160 may be a battery, such as a rechargeable battery.

The input apparatus 170 may include a keyboard, a mouse, and the like. The keyboard is configured to input an English letter, a number, a punctuation mark, and the like into the terminal device 100, so as to issue a command, input data, and the like to the terminal device 100. The mouse is an indicator for displaying vertical and horizontal coordinates of a system by the terminal device 100, and is configured to input an instruction and the like into the terminal device 100. The input apparatus 170 may be connected to the terminal device 100 in a wired connection manner. For example, the input apparatus 170 is connected to the terminal device 100 by using a GPIO interface, a USB interface, or the like. The input apparatus 170 may alternatively be connected to the terminal device 100 in a wireless manner. For example, the input apparatus 170 is connected to the terminal device 100 in a Bluetooth or infrared manner or the like.

In this embodiment of this application, the terminal device 100 may be a terminal device on which an operating system can run and an application can be installed. Optionally, the operating system that runs on the terminal device may be an Android® system, a Windows® system, an iOS® system, or the like.

For example, the terminal device 100 is a mobile phone. A software system of the terminal device 100 may use a layered architecture, an event-driven architecture, a microkernel architecture, a micro-service architecture, or a cloud architecture. In an embodiment of the present invention, a software structure of the terminal device 100 is illustratively described with an example of an Android system having a layered architecture.

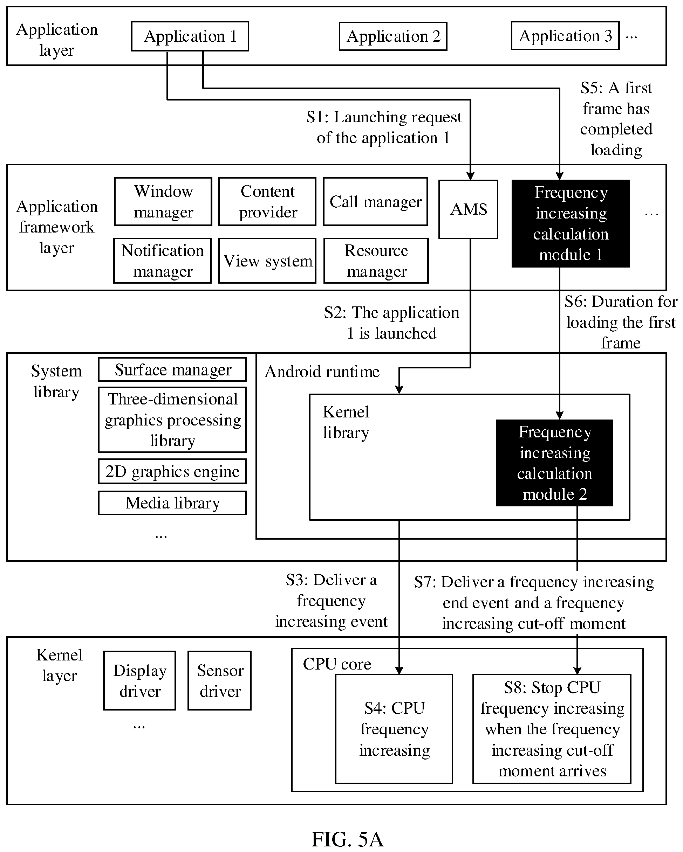

FIG. 5A is a block diagram of a software structure of a terminal device 100 according to an embodiment of present invention.

In a layered architecture, software is divided into several layers, and each layer has a clear role and task. The layers communicate with each other by using a software interface. In some embodiments, the Android system is divided into four layers: an application layer, an application framework layer, an Android runtime (Android runtime) and system library, and a kernel layer from top to bottom.

The application layer may include a series of application packages, for example, applications such as camera, gallery, calendar, call, map, navigation, WLAN, Bluetooth, music, video, messages, application 1, application 2, and application 3.

The application framework layer provides an application programming interface (API) and a programming framework for an application at the application layer. The application framework layer includes some predefined functions.

As shown in FIG. 5A, the application framework layer may include a window manager, a content provider, a call manager, a view system, a resource manager, a notification manager, an activity manager service (AMS), a frequency increasing calculation module 1, and the like.

The window manager is configured to manage a window program. The window manager may obtain a size of a display screen, determine whether a status bar exists, whether to lock a screen, take a screenshot, and the like.

The call manager is configured to provide a communication function of the terminal device 100, for example, call status management (including answering, hanging up, and the like).

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. The display interface may include one or more views. For example, a display interface including an SMS message notification icon may include a view for displaying a text and a view for displaying a picture.

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the terminal device vibrates, or an indicator light blinks.

The AMS is mainly responsible for starting, switching, scheduling of four components in a system and management and scheduling of application processes. Its responsibilities are similar to a process management and scheduling module in the operating system. When process starting or component starting is initiated, a request is transmitted to the AMS by using a Binder communication mechanism, and the AMS performs unified processing.

The system library may include a plurality of functional modules, for example, a surface manager, a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The Android runtime is responsible for scheduling and management of an Android system. The Android runtime includes a kernel library and a virtual machine.

The kernel library includes two parts: One part is a functional function that needs to be invoked in a java language, and the other part is a kernel library of Android.

The kernel library includes a frequency increasing calculation module 2. The frequency increasing calculation module 1 and the frequency increasing calculation module 2 jointly manage CPU frequency increasing duration and the like.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The kernel layer is a layer between hardware and software. The kernel layer may include a display driver, a sensor driver, a CPU core, and the like.

With reference to the software architecture of the terminal device 100, the following exemplarily describes a CPU frequency adjustment method provided in an embodiment of this application.

For example, as shown in FIG. 5A, an application 1 starts to launch. For example, a mobile phone displays a user interface on a screen. The user interface includes an application icon of the application 1. A user taps the application icon of the application 1. In response to receiving an operation of tapping the application icon of the application 1 by the user, the application 1 sends a launching request of the application 1 to the AMS. The AMS launches the application 1 and notifies the kernel library that the application 1 is launched. The kernel library delivers a frequency increasing event to a CPU core. The CPU core receives the frequency increasing event, and triggers CPU frequency increasing.

When a first frame of the application 1 has completed loading, the application 1 notifies the frequency increasing calculation module 1 that the first frame of the application 1 has completed loading. The frequency increasing calculation module 1 calculates duration for loading the first frame of the application 1; and then invoke a frequency increasing calculation module 2 in the kernel library, and calculate a CPU frequency increasing cut-off moment according to the duration for loading the first frame of the application 1. The kernel library delivers a frequency increasing end event and the frequency increasing cut-off moment to the CPU core. The CPU core receives the frequency increasing end event, and stops CPU frequency increasing when the frequency increasing cut-off moment arrives.

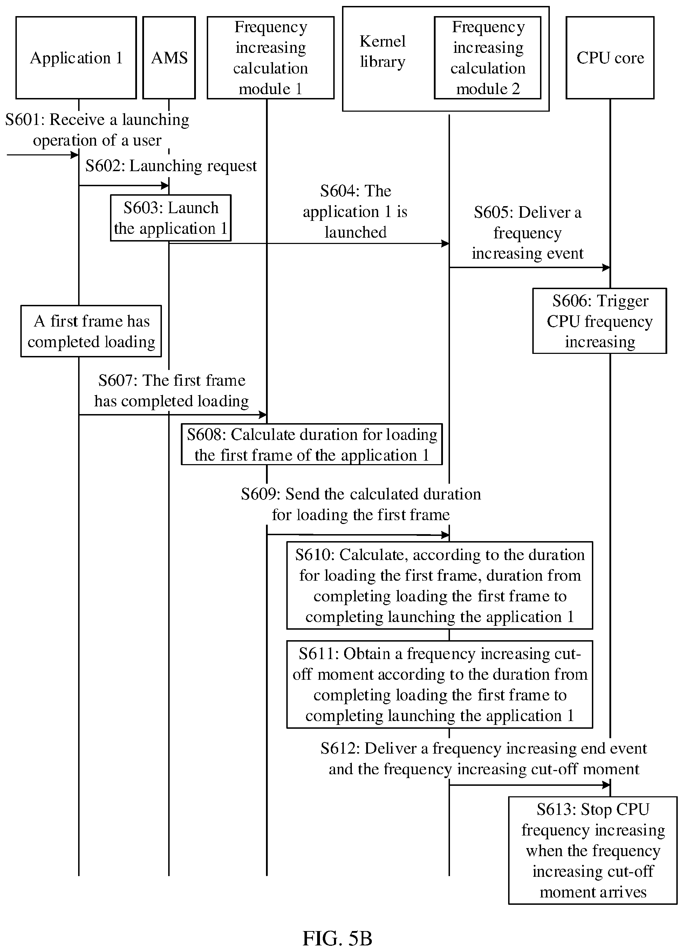

For example, with reference to the software architecture shown in FIG. 5A, FIG. 5B shows a schematic diagram of module interaction of a CPU frequency adjustment method according to an embodiment of this application.

As shown in FIG. 5B, the CPU frequency adjustment method provided in this embodiment of this application may include the following steps:

S601: An application 1 receives a launching operation of a user.

For example, at a first moment, the application 1 receives an operation of tapping an application icon of the application 1 by the user, and the first moment is recorded.

S602: The application 1 sends a launching request to an AMS.

In response to receiving the launching operation of the user, the application 1 sends the launching request to the AMS.

S603: The AMS launches the application 1.

After receiving the launching request, the AMS starts to load a first frame of the application 1 to create an Activity corresponding to the first frame.

S604: The AMS notifies a kernel library that the application 1 is launched.

S605: The kernel library delivers a frequency increasing event to a CPU core.

The kernel library receives the notification that the application 1 is launched, and delivers a frequency increasing event to the CPU core.

S606: The CPU core triggers CPU frequency increasing.

In an implementation, the CPU core increases a frequency of a CPU from a first value to a second value. The CPU works at a relatively high frequency, which may accelerate a launching process of the application 1.

S607: When a first frame of the application 1 has completed loading, the application 1 notifies a frequency increasing calculation module 1 that the first frame of the application 1 has completed loading.

For example, when an Activity corresponding to the first frame of the application 1 has completed launching, the application 1 notifies the frequency increasing calculation module 1 that the first frame has completed loading.

S608: The frequency increasing calculation module 1 calculates duration for loading the first frame of the application 1.

In an implementation, the frequency increasing calculation module 1 receives, at a second moment, the notification that the first frame has completed loading, and calculates the duration for loading the first frame of the application 1 according to the second moment and the saved first moment. The duration for loading the first frame of the application 1 is a difference between the second moment and the first moment.

S609: The frequency increasing calculation module 1 sends the calculated duration for loading the first frame to a frequency increasing calculation module 2.

S610: The frequency increasing calculation module 2 calculates, according to the duration for loading the first frame, duration from completing loading the first frame to completing launching the application 1.

In an implementation, the frequency increasing calculation module 2 calculates, according to the duration for loading the first frame and a preset correspondence (a pre-stored correspondence between X and Y), the duration from completing loading the first frame to completing launching the application 1.

S611: The frequency increasing calculation module 2 obtains a frequency increasing cut-off moment according to the duration from completing loading the first frame to completing launching the application 1.

In an implementation, if the duration from completing loading the first frame to completing launching the application 1 is less than or equal to (a maximum frequency increasing duration threshold - the duration for loading the first frame), it is determined that the CPU frequency increasing cut-off moment is (the second moment + the duration from completing loading the first frame to completing launching the application 1). If the duration from completing loading the first frame to completing launching the application 1 is greater than (the maximum frequency increasing duration threshold - the duration for loading the first frame), it is determined that the CPU frequency increasing cut-off moment is (the first moment + the maximum frequency increasing duration threshold).

S612: The frequency increasing calculation module 2 delivers a frequency increasing end event and the frequency increasing cut-off moment to a CPU core.

S613: The CPU core stops CPU frequency increasing when the frequency increasing cut-off moment arrives.

In an implementation, when the CPU frequency increasing cut-off moment arrives, frequency increasing is no longer performed on the CPU. For example, the frequency of the CPU is reduced from a current second value to a first value.

According to the CPU frequency adjustment method provided in this embodiment of this application, for each application, CPU frequency increasing duration is dynamically calculated according to an actual speed of a current cold launching process of the application.

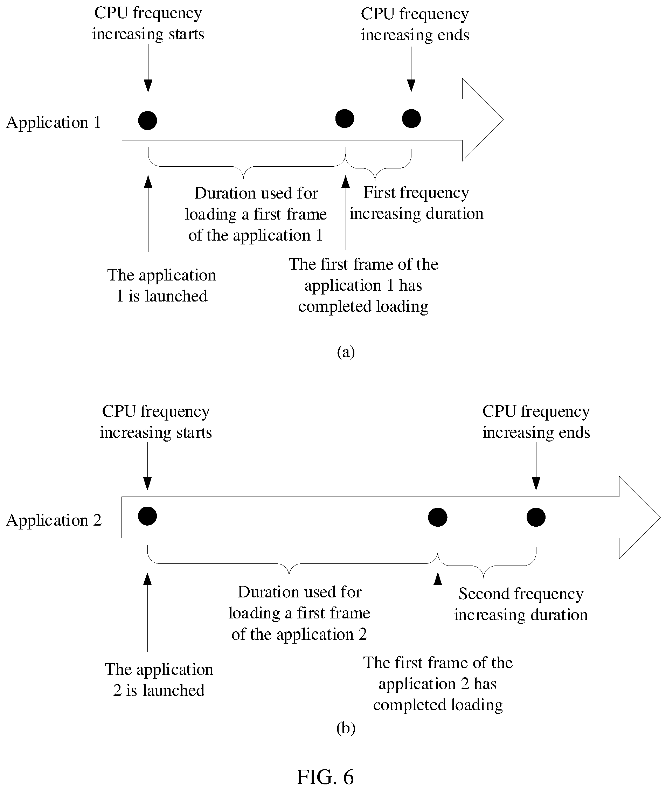

For example, FIG. 6 is a schematic diagram of a CPU frequency increasing processing method when two applications with different cold launching speeds on a terminal device are launched.

In a scenario, referring to (a) in FIG. 6, the terminal device receives an operation of launching an application 1 by a user or invoking by another application, cold launching of the application 1 starts, and the terminal device triggers CPU frequency increasing. A first frame of the application 1 starts to load. When the first frame of the application 1 has completed loading, the terminal device obtains duration for loading the first frame of the application 1. The terminal device calculates, according to the duration used for loading the first frame of the application 1 and a saved correspondence, duration used for loading a remaining frame of the application 1 (a frame between end of loading of the first frame and completion of launching of the application 1), that is, obtains first frequency increasing duration. After the first frequency increasing duration since the first frame of application 1 has completed loading, a frequency of a CPU is reduced.

In a scenario, referring to (b) in FIG. 6, the terminal device receives an operation of launching an application 2 by a user or invoking by another application, cold launching of the application 2 starts, and the terminal device triggers CPU frequency increasing. A first frame of the application 2 starts to load. When the first frame of the application 2 has completed loading, the terminal device obtains duration for loading the first frame of the application 2. The terminal device calculates, according to the duration used for loading the first frame of the application 2 and a saved correspondence, duration used for loading a remaining frame of the application 2 (a frame between end of loading of the first frame and completion of launching of the application 2), that is, obtains second frequency increasing duration. After the second frequency increasing duration since the first frame of application 2 has completed loading, the frequency of the CPU is reduced.

It may be learned that when cold launching duration of the application 1 is less than cold launching duration of the application 2, for example, the cold launching duration of the application 1 is 1261 ms, and the cold launching duration of the application 2 is 4714 ms, the duration used for loading the first frame of the application 1 is less than the duration used for loading the first frame of the application 2. The first frequency increasing duration is obtained through calculation according to the duration used for loading the first frame of the application 1 and the saved correspondence, and the second frequency increasing duration is obtained through calculation according to the duration used for loading the first frame of the application 2 and the saved correspondence. Therefore, the first frequency increasing duration is also less than the second frequency increasing duration.

That is, when cold launching of the application 1 is performed, CPU frequency increasing duration is a sum of the duration used for loading the first frame of the application 1 and the duration used for loading the remaining frame of the application 1 (the frame between end of loading of the first frame and completion of launching of the application 1), and the CPU frequency increasing duration matches a cold launching speed of the application 1. When cold launching of the application 2 is performed, CPU frequency increasing duration is a sum of the duration used for loading the first frame of the application 2 and the duration used for loading the remaining frame of the application 2 (the frame between end of loading of the first frame and completion of launching of the application 2), and the CPU frequency increasing duration matches a cold launching speed of the application 2. The CPU frequency increasing duration matches the cold launching speed of each application, so that it can be ensured that a CPU capability is fully used to accelerate a complete process of cold launching of an application, and a waste of CPU power is avoided.

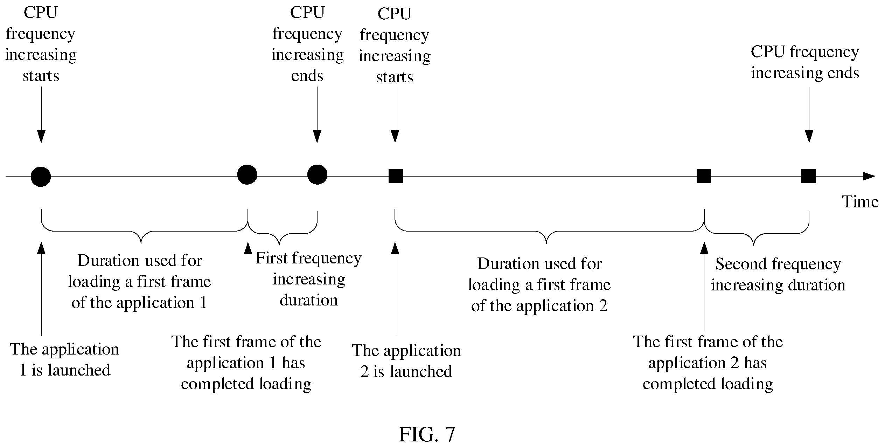

In some embodiments, the application 2 is launched after the application 1 has completed launching, that is, the launching process of the application 1 and the launching process of the application 2 do not overlap on a timeline. Referring to FIG. 7, the application 1 is launched. When the application 1 is launched, frequency increasing processing starts to be performed on the CPU. The duration from completing loading the first frame of the application 1 to completing launching the application 1 (the first frequency increasing duration) is calculated according to the duration used for loading the first frame of the application 1, frequency reducing processing is performed on the CPU at an estimated completion moment of launching of the application 1. Then, when the application 2 is launched, frequency increasing processing starts to be performed on the CPU. The duration from completing loading the first frame of the application 2 to completing launching the application 2 (the second frequency increasing duration) is calculated according to the duration used for loading the first frame of the application 2, frequency reducing processing is performed on the CPU at an estimated completion moment of launching of the application 2. When the two applications are launched, the current CPU frequency increasing duration is adjusted according to the duration used for loading the first frame, respectively.

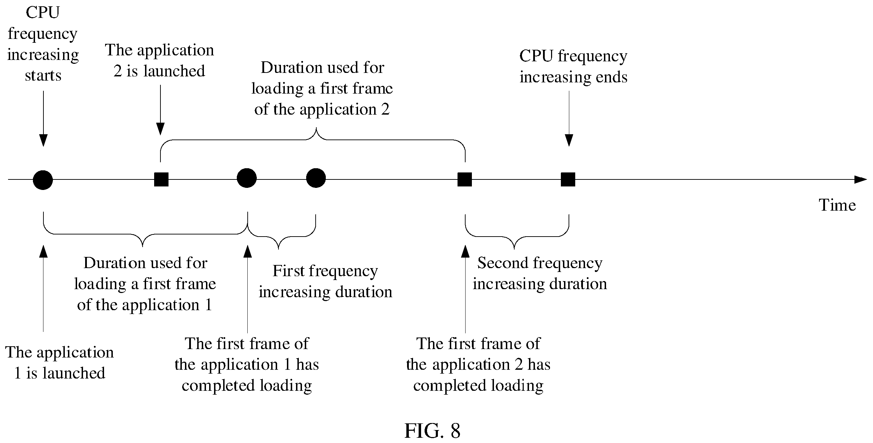

In some embodiments, the application 2 is launched in a launching process of the application 1, and the application 2 completes launching after completion of launching of the application 1. Referring to FIG. 8, the application 1 is launched. When the application 1 is launched, frequency increasing processing is performed on the CPU. For example, the frequency of the CPU is increased from the first value to the second value. When the first frame of the application 1 completes loading, the duration from completing loading the first frame of the application 1 to completing launching the application 1 (the first frequency increasing duration) is calculated according to the duration used for loading the first frame of the application 1. In a process of loading the first frame of the application 1, the application 2 is launched. In response to triggering of the application 1, frequency increasing processing has been performed on the CPU. After the application 2 is launched, CPU frequency increasing (the frequency of the CPU is increased to the second value) continues to be maintained. CPU frequency increasing (the frequency of the CPU is increased to the second value) continues to be maintained at the calculated completion moment of launching of the application 1 (the end moment of the first frequency increasing duration) because the calculated completion moment of launching of the application 2 does not arrive. When the first frame of the application 2 completes loading, the duration from completing loading the first frame of the application 2 to completing launching the application 2 (the second frequency increasing duration) is calculated according to the duration used for loading the first frame of the application 2. Frequency reducing processing is performed on the CPU at the calculated completion moment of launching (the end moment of the second frequency increasing duration) of the application 2. For example, the frequency of the CPU is reduced to the first value.

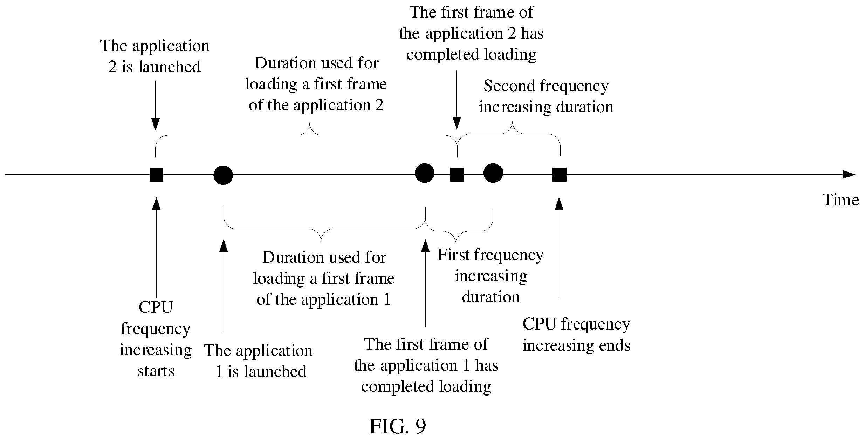

In some embodiments, referring to FIG. 9, the application 2 is launched. When the application 2 is launched, frequency increasing processing is performed on the CPU. For example, the frequency of the CPU is increased from the first value to the second value. When the first frame of the application 2 completes loading, the duration from completing loading the first frame of the application 2 to completing launching the application 2 (the second frequency increasing duration) is calculated according to the duration used for loading the first frame of the application 2. In a process of loading the first frame of the application 2, the application 1 is launched. In response to triggering of the application 2, frequency increasing processing has been performed on the CPU. After the application 1 is launched, CPU frequency increasing (the frequency of the CPU is increased to the second value) continues to be maintained. When the first frame of the application 1 completes loading, the duration from completing loading the first frame of the application 1 to completing launching the application 1 (the first frequency increasing duration) is calculated according to the duration used for loading the first frame of the application 1. CPU frequency increasing (the frequency of the CPU is increased to the second value) continues to be maintained at the calculated completion moment of launching of the application 1 (the end moment of the first frequency increasing duration) because the calculated completion moment of launching of the application 2 does not arrive. Frequency reducing processing is performed on the CPU at the calculated completion moment of launching (the end moment of the second frequency increasing duration) of the application 2. For example, the frequency of the CPU is reduced to the first value.

That is, if launching processes of a plurality of applications overlap on a timeline, the frequency of the CPU is increased when an application with an earliest launching moment is launched. The frequency of the CPU is reduced when a latest moment of calculated launching completion moments of the plurality of applications arrives.

It may be understood that to implement the foregoing functions, the terminal device provided in the embodiments of this application includes corresponding hardware structures and/or software modules for performing the functions. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in the embodiments of this application is an example, and is merely logical function division. During actual implementation, there may be another division manner.

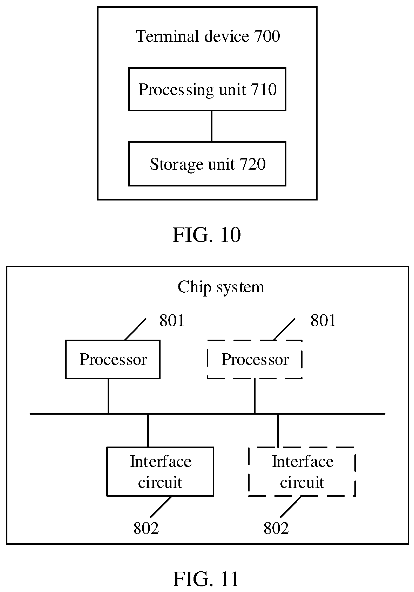

In an example, FIG. 10 is a schematic diagram of a possible structure of the terminal device in the foregoing embodiments. The terminal device 700 includes a processing unit 710 and a storage unit 720.

The processing unit 710 is configured to control and manage an action of the terminal device 700. The storage unit 720 is configured to store program code and data of the terminal device 700, and the processing unit 710 invokes the program code stored in the storage unit 720 to perform the steps in the above method embodiments.

Certainly, unit modules in the terminal device 700 include, but are not limited to, the processing unit 710 and the storage unit 720. For example, the terminal device 700 may further include a display unit, a communication unit, a power unit, and the like. The display unit is configured to display a user interface of the terminal device 700, for example, display an application icon and display an application interface. The communication unit is configured to communicate with another electronic device by the terminal device 700. The power unit is configured to supply power to the terminal device 700.

The processing unit 710 may be a processor or a controller, for example, may be a central processing unit (CPU), a graphics processing unit (GPU), a digital signal processor (DSP), an application-specific integrated circuit (ASIC), a field programmable gate array (FPGA) or another programmable logical device, a transistor logical device, a hardware component, or any combination thereof. The storage unit 720 may be a memory. The display unit may be a display screen, or the like.

For example, the processing unit 710 is a processor (the processor 110 shown in FIG. 4), the storage unit 720 may be a memory (the internal memory 121 shown in FIG. 4), and the display unit may be a display screen (the display screen 140 shown in FIG. 4). The terminal device 700 provided in this embodiment of this application may be the terminal device 100 shown in FIG. 4. The processor, the memory, the display screen, and the like may be connected together, for example, by using a bus. The processor invokes the program code stored in the memory to perform the steps in the above method embodiments.

An embodiment of this application further provides a chip system (for example, a system on a chip (SoC)). As shown in FIG. 11, the chip system includes at least one processor 801 and at least one interface circuit 802. The processor 801 and the interface circuit 802 may be connected to each other through a line. For example, the interface circuit 802 may be configured to receive a signal from another apparatus (for example, a memory of an electronic device). For another example, the interface circuit 802 may be configured to send a signal to another apparatus (for example, the processor 801 or a touchscreen of the terminal device). For example, the interface circuit 802 may read the instructions stored in the memory, and send the instructions to the processor 801. When the instructions are executed by the processor 801, the terminal device is enabled to perform the steps in the foregoing embodiment. Certainly, the chip system may further include another discrete component. This is not specifically limited in this embodiment of this application.

An embodiment of this application further provides a computer-readable storage medium. The computer-readable storage medium includes computer instructions. The computer instructions, when being run on the foregoing terminal device, cause the terminal device to perform the functions or steps in the foregoing method embodiment.

An embodiment of this application further provides a computer program product. When the computer program product runs on a computer, the computer is enabled to perform the functions or steps in the foregoing method embodiments.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor to perform all or some of the steps of the methods described in the embodiments of this application. The storage medium includes various media that can store program code, for example, a USB flash drive, a removable hard disk, a read-only memory (ROM), a random access memory (RAM), a magnetic disk, or an optical disc.

The foregoing content is only specific implementations of this application, but is not intended to limit the protection scope of this application.

## Claims

1. A central processing unit, CPU, frequency adjustment method, applied to a terminal device (100), wherein the terminal device (100) comprises a central processing unit, CPU (110), a first application and a second application are installed on the terminal device (100), and the method comprises:

   launching the first application, wherein a process of the first application does not exist in a system background of the terminal device (100) before the first application is launched;

increasing a frequency of the CPU (110) in response to launching the first application;

reducing the frequency of the CPU (110) after first frequency increasing duration since a first frame of the first application has completed loading;

launching the second application, wherein a process of the second application does not exist in the system background of the terminal device (100) before the second application is launched, and the second application is launched after the first application has completed launching;

increasing the frequency of the CPU (110) in response to launching the second application; and

reducing the frequency of the CPU (110) after second frequency increasing duration since a first frame of the second application has completed loading;

wherein duration used for loading the first frame of the first application is less than duration used for loading the first frame of the second application, and the first frequency increasing duration is less than the second frequency increasing duration;

wherein, for each of the first application and the second application, if the frequency increasing duration to be applied after completion of loading the first frame is greater than the difference between a preset maximum frequency increasing duration threshold and the duration used for loading the first frame, a CPU frequency increasing cut-off moment is determined according to the maximum frequency increasing duration threshold, and the frequency of the CPU (110) is reduced at the cut-off moment.

2. The method according to claim 1, wherein

the first frequency increasing duration is obtained according to the duration used for loading the first frame of the first application and a preset correspondence; and

the second frequency increasing duration is obtained according to the duration used for loading the first frame of the second application and the correspondence.

3. The method according to claim 2, wherein
that the first frame of the first application has completed loading comprises:

a main interface Activity of the first application has completed launching; and
that the first frame of the second application has completed loading comprises:
a main interface Activity of the second application has completed launching.

4. The method according to any one of claims 1 to 3, wherein
the increasing a frequency of the CPU (110) in response to launching the first application comprises:

increasing the frequency of the CPU (110) from a first value to a second value in response to launching the first application; and

the reducing the frequency of the CPU (110) after first frequency increasing duration since a first frame of the first application has completed loading comprises:

reducing the frequency of the CPU (110) from the second value to the first value after the first frequency increasing duration since the first frame of the first application has completed loading.

5. The method according to claim 4, wherein
the increasing the frequency of the CPU (110) in response to launching the second application comprises:

increasing the frequency of the CPU (110) from the first value to the second value in response to launching the second application; and

the reducing the frequency of the CPU (110) after second frequency increasing duration since a first frame of the second application has completed loading comprises:

reducing the frequency of the CPU (110) from the second value to the first value after the second frequency increasing duration since the first frame of the second application has completed loading.

6. A central processing unit, CPU, frequency adjustment method, applied to a terminal device (100), wherein the terminal device (100) comprises a central processing unit, CPU (110), a first application is installed on the terminal device (100), and the method comprises:

launching the first application at a first moment, wherein a launching process of the first application comprises a first phase and a second phase, the second phase is a phase other than the first phase in the launching process of the first application, and the second phase is after the first phase;

increasing a frequency of the CPU (110) in response to launching the first application;

obtaining, according to the first moment and a second moment, duration used in the first phase, wherein the second moment is a launching completion moment of the first phase of the first application;

determining, according to the duration used in the first phase and a preset correspondence, duration used in the second phase;

obtaining a third moment according to the duration used in the second phase, wherein the third moment is an end moment of the second phase; and

reducing the frequency of the CPU (110) at the third moment;

wherein, if the sum of the duration used in the first phase and the duration used in the second phase exceeds a preset maximum frequency increasing duration threshold, the frequency of the CPU (110) is reduced at a fourth moment, the fourth moment occurring at the maximum frequency increasing duration threshold later than the first moment.

7. The method according to claim 6, wherein the first phase is a phase in which a first frame of the first application has completed loading.

8. The method according to claim 7, wherein that the first frame of the first application has completed loading comprises: a main interface Activity of the first application has completed launching.

9. The method according to any one of claims 6 to 8, wherein
the increasing a frequency of the CPU (110) comprises:

increasing the frequency of the CPU (110) from a first value to a second value; and
the reducing the frequency of the CPU (110) comprises:
reducing the frequency of the CPU (110) from the second value to the first value.

10. The method according to any one of claims 6 to 9, wherein the correspondence is obtained by performing linear regression according to launching data of N applications; and launching data of an ith application in the N applications comprises duration $X_i$ used in a first phase of a launching process of the ith application, and duration $Y_i$ used in a second phase of the launching process of the ith application, wherein N>0.

11. The method according to any one of claims 6 to 10, wherein a process of the first application does not exist in a system background of the terminal device (100) before the first application is launched.

12. The method according to any one of claims 6 to 11, wherein the launching the first application comprises:

receiving, by the terminal device (100), a launching operation performed by a user on the first application; and
launching the first application in response to the launching operation;

13. The method according to any one of claims 6 to 11, wherein the launching the first application comprises:
launching the first application in response to invoking by a second application.

14. A terminal device (100), wherein the terminal device (100) comprises a processor (110) and a memory (121), the processor (110) is coupled to the memory (121), the memory (121) is configured to store computer program code, the computer program code comprises computer instructions, and when the processor (110) executes the computer instructions, the terminal device (100) is enabled to perform the method according to any one of claims 1 to 13.

15. A computer-readable storage medium, wherein the computer-readable storage medium comprises computer instructions, and when the computer instructions are run on an electronic device, the electronic device is enabled to perform the method according to any one of claims 1 to 13.

**Patentansprüche**

1. Verfahren zur Frequenzeinstellung einer zentralen Verarbeitungsrecheneinheit, CPU, angewendet auf eine Endgerätvorrichtung (100), wobei die Endgerätvorrichtung (100) eine zentrale Verarbeitungsrecheneinheit, CPU (110), umfasst, eine erste Anwendung und eine zweite Anwendung auf der Endgerätvorrichtung (100) installiert sind, und das Verfahren Folgendes umfasst:

Starten der ersten Anwendung, wobei ein Prozess der ersten Anwendung in einem Systemhintergrund der Endgerätvorrichtung (100) nicht existiert, bevor die erste Anwendung gestartet wird;
Erhöhen einer Frequenz der CPU (110) als Reaktion auf das Starten der ersten Anwendung;
Verringern der Frequenz der CPU (110) nach einer ersten Frequenzerhöhungsdauer, seit ein erster Frame der ersten Anwendung das Laden abgeschlossen hat;
Starten der zweiten Anwendung, wobei ein Prozess der zweiten Anwendung im Systemhintergrund der Endgerätvorrichtung (100) nicht existiert, bevor die zweite Anwendung gestartet wird, und die zweite Anwendung gestartet wird, nachdem die erste Anwendung das Starten abgeschlossen hat;
Erhöhen der Frequenz der CPU (110) als Reaktion auf das Starten der zweiten Anwendung; und
Verringern der Frequenz der CPU (110) nach einer zweiten Frequenzerhöhungsdauer, seit ein erster Frame der zweiten Anwendung das Laden abgeschlossen hat;
wobei eine Dauer, die zum Laden des ersten Frames der ersten Anwendung verwendet wird, geringer ist als eine Dauer, die zum Laden des ersten Frames der zweiten Anwendung verwendet wird, und die erste Frequenzerhöhungsdauer geringer ist als die zweite Frequenzerhöhungsdauer;
wobei für jede von der ersten Anwendung und der zweiten Anwendung, wenn die nach Abschluss des Ladens des ersten Frames anzuwendende Frequenzerhöhungsdauer größer ist als die Differenz zwischen einem voreingestellten Schwellenwert für die maximale Frequenzerhöhungsdauer und der zum Laden des ersten Frames verwendeten Dauer, ein CPU-Frequenzerhöhungs-Abschaltmoment gemäß dem Schwellenwert für die maximale Frequenzerhöhungsdauer bestimmt wird und die Frequenz der CPU (110) im Abschaltmoment verringert wird.

2. Verfahren nach Anspruch 1, wobei

die erste Frequenzerhöhungsdauer gemäß der zum Laden des ersten Frames der ersten Anwendung verwendeten Dauer und einer voreingestellten Entsprechung erhalten wird; und
die zweite Frequenzerhöhungsdauer gemäß der zum Laden des ersten Frames der zweiten Anwendung verwendeten Dauer und der Entsprechung erhalten wird.

3. Verfahren nach Anspruch 2, wobei
dass der erste Frame der ersten Anwendung das Laden abgeschlossen hat, Folgendes umfasst:

eine Hauptschnittstellen-Aktivität der ersten Anwendung das Starten abgeschlossen hat; und
dass der erste Frame der zweiten Anwendung das Laden abgeschlossen hat, Folgendes umfasst:
eine Hauptschnittstellen-Aktivität der zweiten Anwendung das Starten abgeschlossen hat.

4. Verfahren nach einem der Ansprüche 1 bis 3, wobei
das Erhöhen einer Frequenz der CPU (110) als Reaktion auf das Starten der ersten Anwendung Folgendes umfasst:

Erhöhen der Frequenz der CPU (110) von einem ersten Wert auf einen zweiten Wert als Reaktion auf das Starten der ersten Anwendung; und
das Verringern der Frequenz der CPU (110) nach der ersten Frequenzerhöhungsdauer, seit ein erster Frame der ersten Anwendung das Laden abgeschlossen hat, Folgendes umfasst:
Verringern der Frequenz der CPU (110) von dem zweiten Wert auf den ersten Wert nach der ersten Frequenzerhöhungsdauer, seit der erste Frame der ersten Anwendung das Laden abgeschlossen hat.

5. Verfahren nach Anspruch 4, wobei
das Erhöhen der Frequenz der CPU (110) als Reaktion auf das Starten der zweiten Anwendung Folgendes umfasst:

Erhöhen der Frequenz der CPU (110) von dem ersten Wert auf den zweiten Wert als Reaktion auf das Starten der zweiten Anwendung; und
das Verringern der Frequenz der CPU (110) nach der zweiten Frequenzerhöhungsdauer, seit ein erster Frame der zweiten Anwendung das Laden abgeschlossen hat, Folgendes umfasst:
Verringern der Frequenz der CPU (110) von dem zweiten Wert auf den ersten Wert nach der zweiten Frequenzerhöhungsdauer, seit der erste Frame der zweiten Anwendung das Laden abgeschlossen hat.

6. Verfahren zur Frequenzeinstellung einer zentralen Verarbeitungsrecheneinheit, CPU, angewendet auf eine Endgerätvorrichtung (100), wobei die Endgerätvorrichtung (100) eine zentrale Verarbeitungsrecheneinheit, CPU (110), umfasst, eine erste Anwendung auf der Endgerätvorrichtung (100) installiert ist, und das Verfahren Folgendes umfasst:

Starten der ersten Anwendung zu einem ersten Moment, wobei ein Startprozess der ersten Anwendung eine erste Phase und eine zweite Phase umfasst, wobei die zweite Phase eine andere Phase als die erste Phase im Startprozess der ersten Anwendung ist und die zweite Phase nach der ersten Phase liegt;
Erhöhen einer Frequenz der CPU (110) als Reaktion auf das Starten der ersten Anwendung;
Erhalten, gemäß dem ersten Moment und einem zweiten Moment, einer in der ersten Phase verwendeten Dauer, wobei der zweite Moment ein Startabschlussmoment der ersten Phase der ersten Anwendung ist;
Bestimmen, gemäß der in der ersten Phase verwendeten Dauer und einer voreingestellten Entsprechung, einer in der zweiten Phase verwendeten Dauer;
Erhalten eines dritten Moments gemäß der in der zweiten Phase verwendeten Dauer, wobei der dritte Moment ein Endmoment der zweiten Phase ist; und
Verringern der Frequenz der CPU (110) zu dem dritten Moment;
wobei, wenn die Summe der in der ersten Phase verwendeten Dauer und der in der zweiten Phase verwendeten Dauer einen voreingestellten Schwellenwert für die maximale Frequenzerhöhungsdauer überschreitet, die Frequenz der CPU (110) zu einem vierten Moment verringert wird, wobei der vierte Moment zum Schwellenwert für die maximale Frequenzerhöhungsdauer später als der erste Moment eintritt.

7. Verfahren nach Anspruch 6, wobei die erste Phase eine Phase ist, in der ein erster Frame der ersten Anwendung das Laden abgeschlossen hat.

8. Verfahren nach Anspruch 7, wobei dass der erste Frame der ersten Anwendung das Laden abgeschlossen hat, Folgendes umfasst:
eine Hauptschnittstellen-Aktivität der ersten Anwendung das Starten abgeschlossen hat.

9. Verfahren nach einem der Ansprüche 6 bis 8, wobei
das Erhöhen einer Frequenz der CPU (110) Folgendes umfasst:

Erhöhen der Frequenz der CPU (110) von einem ersten Wert auf einen zweiten Wert; und
das Verringern der Frequenz der CPU (110) Folgendes umfasst:
Verringern der Frequenz der CPU (110) von dem zweiten Wert auf den ersten Wert.

10. Verfahren nach einem der Ansprüche 6 bis 9, wobei die Entsprechung durch Durchführen einer linearen Regression gemäß Startdaten von N Anwendungen erhalten wird, und Startdaten einer i-ten Anwendung in den N Anwendungen eine Dauer Xi, die in einer ersten Phase eines Startprozesses der i-ten Anwendung verwendet wird, und eine Dauer Yi umfassen, die in einer zweiten Phase des Startprozesses der i-ten Anwendung verwendet wird, wobei N>0 ist.

11. Verfahren nach einem der Ansprüche 6 bis 10, wobei ein Prozess der ersten Anwendung im Systemhintergrund der Endgerätvorrichtung (100) nicht existiert, bevor die erste Anwendung gestartet wird.

12. Verfahren nach einem der Ansprüche 6 bis 11, wobei das Starten der ersten Anwendung Folgendes umfasst:

Empfangen, durch die Endgerätvorrichtung (100), einer von einem Benutzer an der ersten Anwendung durchgeführten Startoperation; und
Starten der ersten Anwendung als Reaktion auf die Startoperation.

13. Verfahren nach einem der Ansprüche 6 bis 11, wobei das Starten der ersten Anwendung Folgendes umfasst:

Starten der ersten Anwendung als Reaktion auf den Aufruf durch eine zweite Anwendung.

14. Endgerätvorrichtung (100), wobei die Endgerätvorrichtung (100) einen Prozessor (110) und einen Speicher (121) umfasst, wobei der Prozessor (110) mit dem Speicher (121) gekoppelt ist, der Speicher (121) zum Speichern von Computerprogrammcode konfiguriert ist, der Computerprogrammcode Computeranweisungen umfasst und wenn der Prozessor (110) die Computeranweisungen ausführt, die Endgerätvorrichtung (100) befähigt wird, das Verfahren nach einem der Ansprüche 1 bis 13 durchzuführen.

15. Computerlesbares Speichermedium, wobei das computerlesbare Speichermedium Computeranweisungen umfasst und wenn die Computeranweisungen auf einer elektronischen Vorrichtung ausgeführt werden, die elektronische Vorrichtung befähigt wird, das Verfahren nach einem der Ansprüche 1 bis 13 durchzuführen.

**Revendications**

1. Procédé de réglage de fréquence d'unité centrale de traitement, CPU, appliqué à un dispositif terminal (100), dans lequel le dispositif terminal (100) comprend une unité centrale de traitement, CPU (110), une première application et une seconde application sont installées sur le dispositif terminal (100), et le procédé comprend :

le lancement de la première application, dans lequel un processus de la première application n'existe pas dans un arrière-plan système du dispositif terminal (100) avant que la première application ne soit lancée ;
l'augmentation d'une fréquence de la CPU (110) en réponse au lancement de la première application ;
la réduction de la fréquence de la CPU (110) après une première durée d'augmentation de fréquence depuis qu'une première trame de la première application a terminé son chargement ;
le lancement de la seconde application, dans lequel un processus de la seconde application n'existe pas dans l'arrière-plan système du dispositif terminal (100) avant que la seconde application ne soit lancée, et la seconde application est lancée après que la première application a terminé son lancement ;
l'augmentation de la fréquence de la CPU (110) en réponse au lancement de la seconde application ; et
la réduction de la fréquence de la CPU (110) après une seconde durée d'augmentation de fréquence depuis qu'une première trame de la seconde application a terminé son chargement ;
dans lequel la durée utilisée pour le chargement de la première trame de la première application est inférieure à la durée utilisée pour le chargement de la première trame de la seconde application, et la première durée d'augmentation de fréquence est inférieure à la seconde durée d'augmentation de fréquence ;
dans lequel, pour chacune de la première application et de la seconde application, si la durée d'augmentation de fréquence à appliquer après la fin du chargement de la première trame est supérieure à la différence entre un seuil de durée d'augmentation de fréquence maximum prédéfini et la durée utilisée pour le chargement de la première trame, un moment de coupure d'augmentation de fréquence de CPU est déterminé selon le seuil de durée d'augmentation de fréquence maximum, et la fréquence de la CPU (110) est réduite au moment de coupure.

2. Procédé selon la revendication 1, dans lequel

la première durée d'augmentation de fréquence est obtenue selon la durée utilisée pour le chargement de la première trame de la première application et une correspondance prédéfinie ; et
la seconde durée d'augmentation de fréquence est obtenue selon la durée utilisée pour le chargement de la première trame de la seconde application et la correspondance.

3. Procédé selon la revendication 2, dans lequel
le fait que la première trame de la première application a terminé son chargement comprend :

une activité d'interface principale de la première application a terminé son lancement ; et
le fait que la première trame de la seconde application a terminé son chargement comprend :
une activité d'interface principale de la seconde application a terminé son lancement.

4. Procédé selon l'une quelconque des revendications 1 à 3, dans lequel l'augmentation d'une fréquence de la CPU (110) en réponse au lancement de la première application comprend :

l'augmentation de la fréquence de la CPU (110) d'une première valeur à une seconde valeur en réponse au lancement de la première application ; et
la réduction de la fréquence de la CPU (110) après la première durée d'augmentation de fréquence depuis que la première trame de la première application a terminé son chargement comprend :
la réduction de la fréquence de la CPU (110) de la seconde valeur à la première valeur après la première durée d'augmentation de fréquence depuis que la première trame de la première application a terminé son chargement.

5. Procédé selon la revendication 4, dans lequel
l'augmentation de la fréquence de la CPU (110) en réponse au lancement de la seconde application comprend :

l'augmentation de la fréquence de la CPU (110) de la première valeur à la seconde valeur en réponse au lancement de la seconde application ; et
la réduction de la fréquence de la CPU (110) après la seconde durée d'augmentation de fréquence depuis qu'une première trame de la seconde application a terminé son chargement comprend :
la réduction de la fréquence de la CPU (110) de la seconde valeur à la première valeur après la seconde durée d'augmentation de fréquence depuis que la première trame de la seconde application a terminé son chargement.

6. Procédé de réglage de fréquence d'unité centrale de traitement, CPU, appliqué à un dispositif terminal (100), dans lequel le dispositif terminal (100) comprend une unité centrale de traitement, CPU (110), une première application est installée sur le dispositif terminal (100), et le procédé comprend :

le lancement de la première application à un premier moment, dans lequel un processus de lancement de la première application comprend une première phase et une seconde phase, la seconde phase est une phase autre que la première phase dans le processus de lancement de la première application, et la seconde phase est après la première phase ;
l'augmentation d'une fréquence de la CPU (110) en réponse au lancement de la première application ;
l'obtention, selon le premier moment et un deuxième moment, de la durée utilisée dans la première phase, dans lequel le deuxième moment est un moment de fin de lancement de la première phase de la première application ;
la détermination, selon la durée utilisée dans la première phase et une correspondance prédéfinie, de la durée utilisée dans la seconde phase ;
l'obtention d'un troisième moment selon la durée utilisée dans la seconde phase, dans lequel le troisième moment est un moment de fin de la seconde phase ; et
la réduction de la fréquence de la CPU (110) au troisième moment ;
dans lequel, si la somme de la durée utilisée dans la première phase et de la durée utilisée dans la seconde phase dépasse un seuil de durée d'augmentation de fréquence maximum prédéfini, la fréquence de la CPU (110) est réduite à un quatrième moment, le quatrième moment survenant au seuil de durée d'augmentation de fréquence maximum plus tard que le premier moment.

7. Procédé selon la revendication 6, dans lequel la première phase est une phase dans laquelle une première trame de la première application a terminé son chargement.

8. Procédé selon la revendication 7, dans lequel le fait que la première trame de la première application a terminé son chargement comprend :
une activité d'interface principale de la première application a terminé son lancement.

9. Procédé selon l'une quelconque des revendications 6 à 8, dans lequel
l'augmentation d'une fréquence de la CPU (110) comprend :

l'augmentation de la fréquence de la CPU (110) d'une première valeur à une seconde valeur ; et
la réduction de la fréquence de la CPU (110) comprend :
la réduction de la fréquence de la CPU (110) de la seconde valeur à la première valeur.

10. Procédé selon l'une quelconque des revendications 6 à 9, dans lequel la correspondance est obtenue en effectuant une régression linéaire selon des données de lancement de N applications, et les données de lancement d'une i-ième application parmi les N applications comprennent la durée $X_i$ utilisée dans une première phase d'un processus de lancement de la i-ième application, et la durée $Y_i$ utilisée dans une seconde phase du processus de lancement de la i-ième application, dans lequel N>0.

11. Procédé selon l'une quelconque des revendications 6 à 10, dans lequel un processus de la première application n'existe pas dans l'arrière-plan système du dispositif terminal (100) avant que la première application ne soit lancée.

12. Procédé selon l'une quelconque des revendications 6 à 11, dans lequel le lancement de la première application comprend :

la réception, par le dispositif terminal (100), d'une opération de lancement effectuée par un utilisateur sur la première application ; et
le lancement de la première application en réponse à l'opération de lancement.

**13.** Procédé selon l'une quelconque des revendications 6 à 11, dans lequel le lancement de la première application comprend :
le lancement de la première application en réponse à l'appel par une seconde application.

**14.** Dispositif terminal (100), dans lequel le dispositif terminal (100) comprend un processeur (110) et une mémoire (121), le processeur (110) est couplé à la mémoire (121), la mémoire (121) est configurée pour stocker un code de programme informatique, le code de programme informatique comprend des instructions informatiques, et lorsque le processeur (110) exécute les instructions informatiques, le dispositif terminal (100) est activé pour mettre en œuvre le procédé selon l'une quelconque des revendications 1 à 13.

**15.** Support de stockage lisible par ordinateur, dans lequel le support de stockage lisible par ordinateur comprend des instructions informatiques, et lorsque les instructions informatiques sont exécutées sur un dispositif électronique, le dispositif électronique est activé pour mettre en œuvre le procédé selon l'une quelconque des revendications 1 à 13.

CPU frequency increasing duration

Waste of CPU frequency
increasing resources

Application cold
launching duration

FIG. 1A

CPU frequency increasing duration

Waste of CPU capabilities

Application cold launching duration

FIG. 1B

FIG. 2

S101: Launch a first application

S102: Determine whether cold launching of the first application is performed

Yes

S103: Start CPU frequency increasing, and mark a first moment

S104: Load a first frame of the first application

S105: After the first frame of the first application completes loading at a second moment, obtain duration used for loading the first frame of the first application, that is, obtain first duration

S106: Calculate second duration according to the first duration

S107: Determine a CPU frequency increasing cut-off moment according to the second duration

S108: Stop CPU frequency increasing when the CPU frequency increasing cut-off moment arrives

FIG. 3

Terminal device 100

Antenna 1  Antenna 2

| Internal memory 121 | | Communication module 150 |
| External memory interface 120 | Processor 110 | Power supply module 160 |
| Speaker 130A / Audio module 130 / Microphone 130B | | Input apparatus 170 |
| Display screen 140 | | Sensor module 180 |

FIG. 4

| Application layer | Application 1 | Application 2 | Application 3 | ··· |

S1: Launching request of the application 1

S5: A first frame has completed loading

| Application framework layer | Window manager | Content provider | Call manager | AMS | Frequency increasing calculation module 1 | ··· |
| | Notification manager | View system | Resource manager | | |

S2: The application 1 is launched

S6: Duration for loading the first frame

| System library | Surface manager | Android runtime |
| | Three-dimensional graphics processing library | Kernel library | Frequency increasing calculation module 2 |
| | 2D graphics engine | |
| | Media library | |
| | ... | |

S3: Deliver a frequency increasing event

S7: Deliver a frequency increasing end event and a frequency increasing cut-off moment

| Kernel layer | Display driver | Sensor driver | CPU core |
| | ... | | S4: CPU frequency increasing | S8: Stop CPU frequency increasing when the frequency increasing cut-off moment arrives |

FIG. 5A

| Application 1 | AMS | Frequency increasing calculation module 1 | Kernel library | Frequency increasing calculation module 2 | CPU core |
|---|---|---|---|---|---|

S601: Receive a launching operation of a user

S602: Launching request

S603: Launch the application 1

S604: The application 1 is launched

S605: Deliver a frequency increasing event

S606: Trigger CPU frequency increasing

A first frame has completed loading

S607: The first frame has completed loading

S608: Calculate duration for loading the first frame of the application 1

S609: Send the calculated duration for loading the first frame

S610: Calculate, according to the duration for loading the first frame, duration from completing loading the first frame to completing launching the application 1

S611: Obtain a frequency increasing cut-off moment according to the duration from completing loading the first frame to completing launching the application 1

S612: Deliver a frequency increasing end event and the frequency increasing cut-off moment

S613: Stop CPU frequency increasing when the frequency increasing cut-off moment arrives

FIG. 5B

CPU frequency
increasing starts

CPU frequency
increasing ends

Application 1

Duration used for
loading a first frame
of the application 1

First frequency
increasing duration

The application
1 is launched

The first frame of the
application 1 has
completed loading

(a)

CPU frequency
increasing starts

CPU frequency
increasing ends

Application 2

Duration used for
loading a first frame
of the application 2

Second frequency
increasing duration

The application
2 is launched

The first frame of the
application 2 has
completed loading

(b)

FIG. 6

FIG. 7

EP 4 603 974 B1

FIG. 8

FIG. 9

Terminal device 700

Processing unit 710

Storage unit 720

FIG. 10

Chip system

801

Processor

801

Processor

Interface circuit

802

Interface circuit

802

FIG. 11

**EP 4 603 974 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310553047X

- US 20230045617 A1